# EUROPEAN PATENT APPLICATION

(11) **EP 3 421 958 A1**
(43) Date of publication of application: **02.01.2019**
(21) Application number: 17756370.7
(22) Date of filing: 17.02.2017
(51) Int. Cl.: G01L 5/10

(54) **LOAD FASTENING MEMBER LOOSENING DETECTION DEVICE, AND LOAD FASTENING MEMBER LOOSENING DETECTION SYSTEM**

(30) Priority: 23.02.2016 JP 2016031673
(71) Applicant: Achiseiki Co., Ltd., Shimoina-gun, Nagano 395-0303 (JP); Nagano Prefecture, Nagano-shi, Nagano 380-8570 (JP)
(72) Inventor: KUMAGAI Yuichi, Shimoina-gun Nagano 395-0303 (JP); AOKI Hisao, Matsumoto City Nagano 399-0006 (JP); HAMA Atsushi, Nomizonishi Matsumoto City Nagano 399-0006 (JP); KUBOTA Shoshin, Nomizonishi Matsumoto City Nagano 399-0006 (JP); KOBAYASHI Koji, Nomizonishi Matsumoto City Nagano 399-0006 (JP)
(74) Representative: Conti, Marco
(86) International application number: PCT/JP2017/005894
(87) International publication number: WO 2017/145931

(57) **Abstract**

A load fastening member loosening detection device is provided which is easily attached to a load fastening member for reliably detecting loosening of the load fastening member even in an environment with vibrations. A load fastening member loosening detection device 1 detects loosening of a long load-fastening belt 91 for fixing a load, and includes an attaching member 11 including a supporting part 21, a pair of end arm parts 22 extending from ends of the supporting part 21 respectively, and a central arm part 25 extending from a central portion of the supporting part 21. The attaching member 11 is attached to the load-fastening belt 91 by passing the load-fastening belt 91 over and under the end arm parts 22 and the central arm part 25 alternatively. The device 1 further includes plural sensors mounted on the central arm part 25 for detecting loosening of the load-fastening belt 91.

## Description

This application claims priority to Japanese Patent Application No. 2016-31673 filed in Japan on Feb. 23, 2016, the contents of which are hereby incorporated herein by reference.

### TECHNICAL FIELD

This invention relates to a load-fastening member loosening detection device that detects loosening of an elongated load-fastening member for fastening a load, and a load-fastening member loosening detection system including the load-fastening member loosening detection device.

### BACKGROUND ART

When load is transported by a transportation vehicle such as truck, ship, train or by air, or when the load is piled up in a storage, the load is typically fastened with a flexible elongated load-fastening member such as belt or rope to prevent the load from collapsing. However, even when the load is fastened with an appropriate tension by the load-fastening member, the load-fastening member may sometimes become loose due to vibrations or the time elapsed after the fastening.

Japanese laid-open Patent Publication No. 1989-162123 describes a tension detection device for loading rope which detects tension and loosening of a loading rope (load-fastening member). This device includes rope hooking parts on opposing sides of a main body of the device respectively so that a rope can be extended between the hooking parts and a hook that is located on the truck.

Japanese laid-open Patent Publication No. 1995-43228 describes a tensiometer which includes a first and second hook configured to be attached to both ends of a spring plate so that a rope can be hooked over, a pressing piece attached at a right angle to the middle of the spring plate to be engaged with the rope, and a sensor for sensing deformation of the spring plate. In use, the tensiometer is disposed at the middle point of the rope.

### SUMMARY OF THE INVENTION

### <Technical Problem>

The tension detection device for loading rope described in Japanese laid-open patent publication No. 1989-162123 is used in a state the device being coupled in series with and between two load-fastening members. Thereby, in order to set the device, one end of the load-fastening member has to be set free. This work is complicated.

The tensiometer described in Japanese laid-open patent publication No. 1995-43228 can be easily set to a rope because the tensiometer can be set to the middle of the rope. However, large vibrations occur on a load particularly when the load is transported by the transported vehicle. In this tensiometer, the pressing piece is fixed in the central portion of the spring plate at a right angle. When force due to vibrations from the rope is applied to the pressing piece in an oblique direction, the tension cannot be accurately measured and may be detected with an incorrect value. In addition, when excessive force due to vibrations is applied to the pressing piece in an oblique direction, the device may be broken and cannot detect the tension.

### <Solution to Problem>

Accordingly, in view of the above-described, it is an object of the invention to provide a load-fastening member loosening detection device which can be easily attached to a load-fastening member and can certainly detect loosening of the load-fastening member even in an environment in which vibrations occur, and to provide a load-fastening member loosening detection system including the load-fastening member loosening detection device.

In order to achieve the above object, a load-fastening member loosening detection device according to claim 1 is a detection device for detecting loosening of an elongated load-fastening member for fastening a load, and the device includes an attaching member attachable to a part of the load-fastening member, plural loosening detectors mounted on the attaching member for detecting loosening of the load-fastening member. Here, "a part of the load-fastening member" in the present invention includes both ends of the load-fastening member.

A load-fastening member loosening detection device according to claim 2 is the device according to claim 1, wherein the loosening detectors have different detection sensitivities from each other.

A load-fastening member loosening detection device according to claim 3 is the device according to claim 1 or 2, wherein the attaching member includes: three arm parts over or under which the load-fastening member passes; and a supporting part. The supporting part supports the three arm parts. In addition, the loosening detectors are mounted on the central arm part among the three arm parts. Further, each of the loosening detectors includes a contactor, an elastic body, and a sensor. The contactor contacts with the load-fastening member and is guided to move in a direction perpendicular relative to the load-fastening member. The elastic body biases the contactor toward the load-fastening member. The sensor is engaged with the contactor for detecting loosening of the load-fastening member. The manner of "the loosening detectors contact with the load-fastening member" herein preferably includes the manner in which the loosening detectors directly contact with the load-fastening member, and the manner in which the loosening detectors indirectly contact with the load-fastening member.

A load-fastening member loosening detection device according to claim 4 is the device according to claim 2, wherein the attaching member includes: three arm parts over or under which the load-fastening member passes: and a supporting part. The supporting part supports the three arm parts. The loosening detectors are mounted on the central arm part among the three arm parts. Each of the detectors includes a contactor, an elastic body, and a sensor. The contactor contacts with the load-fastening member and is guided to move in a direction perpendicular relative to the load-fastening member. The elastic body biases the contactor toward the load-fastening member. Further, the sensor is engaged with the contactor for detecting loosening of the load-fastening member. Furthermore, the loosening detectors respectively include elastic bodies having different elastic coefficients to provide different sensitivities. The manner of "the loosening detectors contact with the load-fastening member" herein preferably includes the manner in which the loosening detectors directly contact with the load-fastening member, and the manner in which the loosening detectors indirectly contact with the load-fastening member.

A load-fastening member loosening detection device according to claim 5 is the device according to claim 3 or 4, wherein the supporting part and/or the central arm part are elastic.

A load-fastening member loosening detection device according to claim 6 is the device according to any one of claims 3 to 5, wherein the loosening detectors are arranged on the central arm part along a longitudinal direction of the load-fastening member.

A load-fastening member loosening detection device according to claim 7 is the device according to claim 6, wherein the contactors have a shape to be in contact with the load-fastening member over a transverse direction that is perpendicular to the longitudinal direction of the load-fastening member.

A load-fastening member loosening detection device according to claim 8 is the device according to any one of claims 3 to 5, wherein the loosening detectors are arranged on the central arm part along the traverse direction that is perpendicular to the longitudinal direction of the load-fastening member.

A load-fastening member loosening detection device according to claim 9 is the device according to any one of claims 3 to 5, wherein the loosening detectors are arranged on the central arm part in a concentric pattern.

A load-fastening member loosening detection device according to claim 10 is the device according to any one of claims 3 to 9, wherein the sensor is a switch for switching its contact point between an open state corresponding to a position of the contactor when the load-fastening member is loosened and a closed state corresponding to a position of the contactor when the load-fastening member is tensioned.

A load-fastening member loosening detection device according to claim 11 is a detection device for detecting loosening of the elongated load-fastening member for fastening a load. The load-fastening member loosening detection device includes an attaching member and loosening detector. The attaching member is attachable to a load-fastening member. The loosening detector detects loosening of the load-fastening member. The loosening detector includes a contactor, a guide part, and a sensor. The contactor contacts the load-fastening member. The guide part guides the contactor to move perpendicularly relative to the load-fastening member. A sensor detects loosening of the load-fastening member by way of engagement with the contactor. As such, the loosening detector detects loosening of the load-fastening member as the contactor moves.

A load-fastening member loosening detection device according to claim 12 is the device according to any one of claim 3 to 11, wherein the loosening detector includes plural sensors such that the sensors are engaged with the contactor.

A load-fastening member loosening detection device according to claim 13 is the device according to any one of claim 1 to 12, wherein the load-fastening member loosening detection device is attached to a bed section of a truck where the load is contained.

A load-fastening member loosening detection device according to claim 14 is the device according to any one of claim 1 to 13, wherein the load-fastening member loosening detection device further includes a transmitting circuit. The transmitting circuit transmits the detection result of the loosening detectors to the outside by wire or wirelessly.

A load-fastening member loosening detection device according to claim 15 is the device according to any one of claim 1 to 14, wherein at least one of the loosening detectors functions also as a power switch.

A load-fastening member loosening detection system according to claim 16 includes the load-fastening member loosening detection device according to claim 14 or 15, and a receiving device. The receiving device includes a receiving circuit, an alarm, and an alarm processing circuit. The receiving circuit receives a detection result transmitted by the transmitting circuit of the load-fastening member loosening detection device. The alarm processing circuit activates the alarm so that the detection result that the receiving circuit receives can be notified by the alarm. Advantageous Effects of Invention

According to the load-fastening member loosening detection device of the present invention, since plural loosening detectors for detecting loosening of the load-fastening member are mounted on the attaching member that is attachable to a part of the load-fastening member, loosening of the load-fastening member can be determined when any one of the loosening detectors detects loosening of the load-fastening member. Therefore, loosening of the load-fastening member can be detected with certainty even in an environment with vibrations. In addition, even if one of the loosening detectors is broken down, the other loosening detectors continue to operate. Therefore, loosening of the load-fastening member can be detected with certainty even in an environment with vibrations.

When the loosening detectors have different sensitivities, a loosening degree of the load-fastening member can be detected stagewise. Thus, the beginning of loosening of the load-fastening member can be detected with certainty. As a result, loosening of the load-fastening member can be detected with certainty before the loosening of the load-fastening member increases even in an environment with vibrations.

Since the contactor are guided to move in a direction perpendicular relative to the load-fastening member and are engaged with the sensors that detect loosening of the load-fastening member in the condition that the contactors are biased toward the load-fastening member by the elastic bodies, the contactors can straightly act on the sensors in a stable state even in an environment with vibrations. Therefore, the sensors can operate as expected. As a result, loosening of the load-fastening member can be detected with certainty. Furthermore, when the loosening detectors include the elastic bodies of different elastic coefficients respectively, the loosening detectors can easily have different detection sensitivities.

When the supporting part and/or the central arm part are elastic, the attaching member can be tightly held on the load-fastening member even in an environment with vibrations since the attaching member bends to surround the load-fastening member. Thus, loosening of the load-fastening member can be detected with certainty.

When the loosening detectors are arranged on the central arm part along the longitudinal direction of the load-fastening member, the loosening detectors can remain in contact with the attaching member even if the load-fastening member is slightly displaced relative to the attaching member. Thus, loosening of the load-fastening member can be detected with certainty.

When the contactors have a shape to be in contact with the load-fastening member over a transverse direction that is perpendicular to the longitudinal direction of the load-fastening member, the pressing force of the contactors pressed against the load-fastening member can be distributed equally even if the contactor is pressed hard against the load-fastening member. Thus, the probability that a mark of the contactors is left on the load-fastening member can be reduced.

When the loosening detectors are arranged on the central arm part along the traverse direction perpendicular to the longitudinal direction of the load-fastening member, the device can be downsized. Furthermore, when the central arm part has an elastic property, the central arm part bends due to the elasticity. Therefore, the loosening detector located closer to the base of the central arm part can be pressed hard against the load-fastening member, while the loosening detectors located closer to the distal end of the central arm part can be pressed weakly on the load-fastening member. Thus, detection sensitivities of the loosening detectors can be differentiated even if all the loosening detectors have the same detection sensitivity.

When the loosening detectors are arranged on the central arm part in a concentric pattern, the device can be downsized.

When the sensor is a switch that switches its contact point, corresponding to a position of the contactor, between an open state when the load-fastening member is loosened and a closed state corresponding to a position of the contactor when the load-fastening member is tensioned, the sensor can operate as expected due to its simplified configuration even in an environment with vibrations, and is unlikely to be broken down. Thus, loosening of the load-fastening member can be detected with certainty.

According to the load-fastening member loosening detection device of the second aspect of the present invention, since the contactors contact the load-fastening member and are guided to move in a direction perpendicular relative to the load-fastening member by the guide part, the contactors can straightly act on the sensors in a stable state even in an environment with vibrations. Thus, the sensors can operate as expected. As a result, loosening of the load-fastening member can be detected with certainty.

When the at least one loosening detector are configured to be engaged with plural sensors in the load-fastening member loosening detection device, even if one of the loosening detectors is broken down, the other loosening detectors can continue to operate. Therefore, loosening of the load-fastening member can be detected with certainty even in an environment with vibrations.

When the load-fastening member loosening detection device is attached to a bed section of a truck where the load is contained, the entire tension of the load-fastening member can be caused to act on the loosening detectors. Therefore, loosening of the load-fastening member can be detected with more certainty.

When the load-fastening member loosening detection device includes the transmitting circuit for transmitting a detection result of the loosening detectors to the outside by wire or wirelessly, a signal showing that the load-fastening member is loosened can be transmitted to a location away from the load-fastening member. In addition, if at least one of the loosening detectors functions also as a power switch, the device can be turned on and off without operation by an operator, eliminating the necessity for an operator to remember to turn-off the power switch. According to the load-fastening member loosening detection system of the present invention, the system includes the load-fastening member loosening detection device and a receiving device, and thereby whether the load-fastening member is loosened or not can be monitored at a location away from the load such as in a driver seat of a truck.

### BRIEF DESCRIPTION OF THE INVENTION

Fig. 1 is a exploded perspective view of a load-fastening member loosening detection device according to the present invention.
Fig. 2 is a cross sectional view of the load-fastening member loosening detection device according the present invention in a usage state.
Fig. 3 is a cross sectional view of the load-fastening member loosening detection device according to the present invention in another usage state.
Fig. 4 is a cross sectional view of the load-fastening member loosening detection device according to the present invention in another usage state.
Fig. 5 is a plan view of an attaching member of a load-fastening member loosening detection device according to the present invention and another attaching member of a load-fastening member loosening detection device according to the present invention.
Fig. 6 is an exploded perspective view of another load-fastening member loosening detection device according to the present invention.
Fig. 7 is an enlarged perspective view of the main part of another load-fastening member loosening detection device according to the present invention.
Fig. 8 is an electronic block diagram of a load-fastening member loosening detection device according to the present invention.
Fig. 9 is an electronic block diagram of another load-fastening member loosening detection device according to the present invention.
Fig. 10 is a schematic view of a load-fastening member loosening detection device according to the present invention in a usage state.
Fig. 11 is an electronic block diagram of a receiving device of a load-fastening member loosening detection device according to the present invention.
Fig. 12 is a schematic configuration view showing the general configuration of a modified load-fastening member loosening detection device.
Fig. 13 is a cross sectional view as seen along the line B-B in Fig. 12.

### DETAILED DESCRIPTION OF THE INVENTION

Hereinafter, an embodiment of the present invention will be described in detail, but the scope of sprit of the present invention should not be limited to the embodiment.

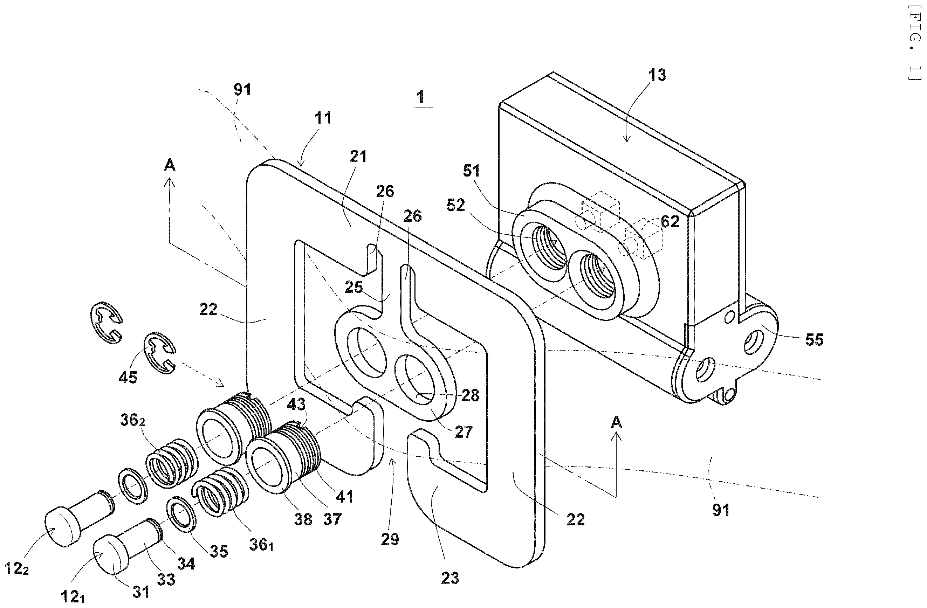

Fig. 1 shows an exploded perspective view of a load-fastening member loosening detection device 1 according to the present invention. The load-fastening member loosening detection device 1 includes an attaching member 11, a first loosening detector 12₁, a second loosening detector 12₂, and a case 13. The load-fastening member loosening detection device 1 is configured to detect loosening of a load-fastening belt 91 (depicted as a two-dot chain line in Fig.1). The load-fastening belt 91 is one example of the "load-fastening member" of the present invention. A load-fastening rope or a load-fastening chain may be used as the load-fastening member.

The attaching member 11 is attachable to a part of the load-fastening belt 91. The attaching member 11 includes three arm parts and a supporting part 21. The load-fastening belt 91 passes over and under the three arm parts in an alternating manner. The supporting part 21 supports the three arm parts. More specifically, the attaching member 11 includes the supporting part 21, a pair of end arm parts 22, 22 and a central arm part 25. The pair of end arm parts 22, 22 extend from both ends of the supporting part 21 respectively. The central arm part 25 extend from a central portion of the supporting part 21. As shown in the same figure, when the load-fastening belt 91 passes over and under the pair of end arm parts 22, 22 and the central arm part 25, which constitute the three arm parts, in an alternating manner, the attaching member 11 is attached to the load-fastening belt 91.

The supporting part 21 is preferably elastic, and is a plate spring for example. The supporting part 21 has a shape such as a plate or a stick.

The end arm parts 22 are configured to have a length corresponding to a width of the load-fastening belt 91. When a load-fastening rope is used as the load-fastening member, the end arm parts 22 are configured to have a length corresponding to an outer diameter of the load-fastening rope. The end arm parts 22 are configured into a wide shape so that the end arm parts 22 cannot be deformed even if a load from the load-fastening belt 91 is applied to the end arm parts 22. An example that the end arm parts 22 have a plate-like shape is shown in Fig.1, but the end arm parts 22 may be have any shape such as a round bar or a square bar. The end arm parts 22, 22 may have different shapes from each other.

The load-fastening belt 91 is set to the attaching member 11 by being inserted through an aperture 29 provided between the end arm parts 22, 22. As shown in the same figure, arm tip pieces 23, 23 preferably are located at the distal ends of the end arm parts 22, 22 respectively. The arm tip pieces 23, 23 respectively extend from the distal ends of the end arm parts 22, 22 so as to face each other. The arm tip pieces narrow the aperture 29, leading to prevention of the load-fastening belt 91 from coming off from the attaching member 11. Alternatively, a dropout prevention member may be provided to open and close the aperture between the end arm parts 22, 22 (not shown in the figures).

The central arm part 25 is preferably elastic, and is a plate spring for example. The central arm part 25 is configured to have a smaller width than that of the end arm parts 22, 22 to have an elastic property. A longer elastic body (the plate spring) has a larger amount of elastic deformation (amount of displacement). In the present example, two slits 26, 26 are provided to the central arm part 25 at a base of the central arm part 25, so as to adjust the amount of elastic deformation of the central arm part 25. Namely, the central arm part 25 is extended into the supporting part 21.

The same figure illustrates an example of the attaching member 11 as a plate that integrally includes the supporting part 21, the pair of end arm parts 22, 22 and the central arm part 25. The attaching member 11 has an E-like shape as a whole. The attaching member 11 is preferably formed from an elastic material that is used for a plate spring. Examples of the elastic material include an elastic resin, a fiber-reinforced resin containing a glass fiber or a carbon fiber, and a metal. In this manner, since the plate-like attaching member 11 is simple in shape, the attaching member 11 can be easily produced. In addition, an appropriate selection of the material, thickness, length, and width for the plate-like shape allows the attaching member 11 to have function (i.e., to be elastic) as a plate spring at any part thereof.

Plural (two, for example) of loosening detectors 12₁, 12₂ are attached to the central arm part 25. The central arm part 25 includes an attaching part 27at its distal end to attach the loosening detectors 12₁, 12₂. The attaching part 27 has holes 28, 28 through which the loosening detectors 12₁, 12₂ are mounted respectively.

The loosening detectors 12 (12₁, 12₂) are to detect loosening of the load-fastening belt 91. As an example, each of the loosening detectors 12 is configured with a contactor 31, a washer 35, a spring 36, a guide tube 37, a snap ring 45 and a sensor 62. The sensor 62 is arranged in the case 13.

The contactor 31 is brought in contact with the load-fastening belt 91, and is guided to move in a direction perpendicular to a longitudinal direction (a surface of the load-fastening belt 91) of the load-fastening belt 91. As an example, the contactor 31 are of a push button type having a circular head. Each of the contactors 31 includes a guide shaft 33 one end of which is connected to the head of the contactor 31. The other end of the guide shaft 33 has a groove 34 located on the outer periphery. As an example, the head part and the guide shaft 33 of each contactor 31 are integrally formed from a rein. The contactors 31 have an outer diameter that allows the contactors 31 to slide through the guide tubes 37 respectively. The contactors 31 are biased toward the load-fastening belt 91 by the springs 36 (36₁, 36₂) respectively. Further, although not shown, an O-ring is preferably disposed around the guide shaft 33 between each contactor 31 and a washer 35 for waterproof. In this case, a groove on which the O-ring fits can be formed around one end of the guide shaft 33. In addition, the washer 35 can be integrally formed from a resin with each of the contactors 31. A structure of the contactors 31 can be changed as needed.

The first loosening detector 12₁ includes a first spring 36₁. The second loosening detector 12₂ includes a second spring 36₂. The springs 36₁, 36₂ are examples as an elastic body, and are compression coil springs. The springs 36₁, 36₂ have different spring constants (elasticity coefficient) from each other. Here, as an example, the first loosening detector 12₁ uses the first spring 36₁ that has a comparatively small (weak) elasticity coefficient, while the second loosening detector 12₂ uses the second spring 36₂ that has a comparatively large (strong) elasticity coefficient. As such, the different spring constants provide different detection sensitivities between the first and second loosening detector 12₁ and 12₂.

The guide tube 37 has a cylindrical shape having a flange 38 at one end. A male screw 41 is provided on an outer periphery of the guide tube 37. An edge part of the other end of the guide tube 37 has a groove 43 (e.g., a minus groove) on which a screw turning tool (e.g., a flat tip screwdriver) can be fit. The guide tube 37 is one example of the "guide part" of the present invention.

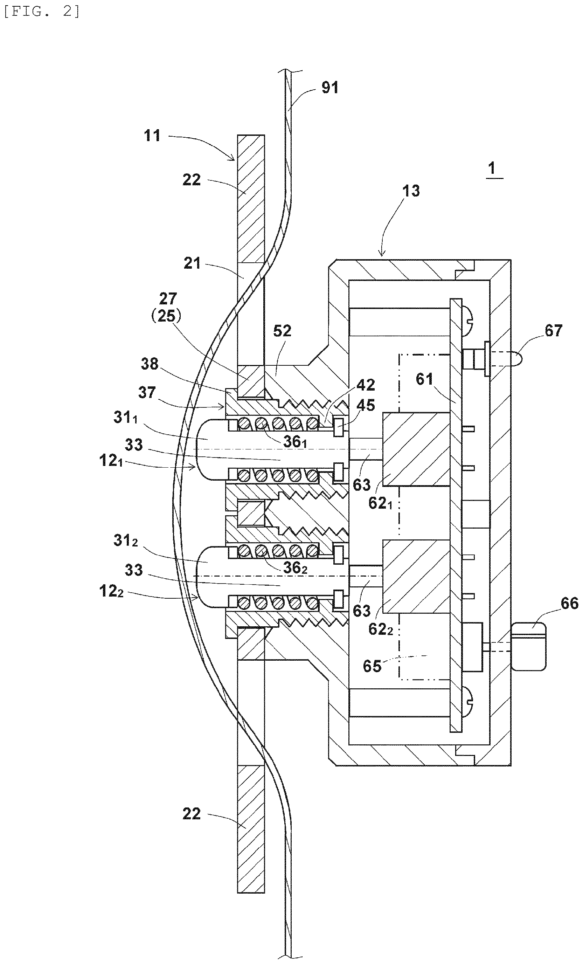

An annular stopper 42 (see Fig.2) protrudes from an inside wall of the other end of the guide tube 37 so that the spring 36 and the snap ring 45 are latched by the stopper 42. The snap ring 45 is, for example, an E snap ring. The stopper 42 has an inner diameter so that the guide shaft 33 can slide through the stopper 42. The guide tube 37 has an inner diameter so that the contactor 31 can slide through the guide tube 37. Thus, since the stopper has the diameter that allows the guide shaft 33 slidable therethrough and the stopper has the diameter that allows the guide shaft 33 slidable therethrough, the contactor 31 is guided by the stopper 42 and the guide tube 37 to be able to move along an axial direction of the guide tube 37.

The case 13 accommodates an electric circuit and a battery. The case 13 is preferably lightweight, and is formed from a resin for example. A cover 55 is attached openably and closably to a battery accommodating part of the case 13. The case 13 has a fixing part 51. The fixing part 51 is to be connected to the attaching part 27 of the central arm part 25 of the attaching member 11. The fixing part 51 protrudes from the case 13 such that the case 13 does not interfere with the load-fastening belt 91. The fixing part 51 has screw holes 52 where female screws are screwed corresponding to the male screws 41 of the guide tubes 37. Each of the screw holes 52 penetrates the fixing part 51 to be communicated with an inside of the case 13. The aspect in which the fixing part 51 is connected to the attaching part 27 of the central arm part 25 of the attaching member 11 is one example of the aspect in which "the loosening detector is mounted on the attaching member" of the present invention.

The loosening detector 12 is assembled as following. First of all, the guide shaft 33 of each contactor 31 is inserted into the washer 35 and the spring 36, and the guide shaft 33 is inserted into one end of the guide tube 37. The contactor 31 is pressed into the guide tube 37 to compress the spring 36, so that the guide shaft 33 protrudes from the other end of the guide tube 37. In this state, the snap ring 45 is fitted into the groove 34 on the guide shaft 33. Thus, the contactor 31 is assembled to the guide tube 37.

Next, the guide tube 37 is inserted into an attaching hole 28 of the attaching member 11, and the male screw 41 of the guide tube 37 is screwed and fixed to the screw hole 52 of the case 13. The screwing is performed by splitting the case 13, engaging the screw turning tool (not shown) with the groove 43 of the guide tube inside of the case 13, and rotating the guide tube 37. As a result, the attaching part 27 is sandwiched to be fixed between the flange 38 of the guide tube 37 and the fixing part 51 of the case 13. It is noted that the groove 43 is provided on the other end side of the guide tube 37, not on one side (flange side) of the guide tube 37 in order to prevent an edge of the groove 43 from contacting and damaging the load-fastening belt 91. Each of the loosening detectors 12 is assembled similarly.

As described above, the loosening detectors 12 and the case 13 are fixed on the central arm part 25.

Fig. 2 is a cross sectional view of the load-fastening member loosening detection device 1 as seen along the line A-A in Fig.1. Fig. 2 also shows the load-fastening belt 91 together with the load-fastening member loosening detection device 1, the belt 91 being completely loosened.

As shown in Fig.2, a printed circuit board 61, on which electrical components are mounted, is screwed-fixed in the case 13. A first sensor 62₁, a second sensor 62₂, a wireless transceiver module 65, an alarm 67, and a power switch 66 are mounted on the printed circuit board 61. An antenna for a wireless communication and a dry cell for power source (not shown in the figures) are arranged in the case 13. The antenna may stick out to the outside of the case if necessary.

The sensors 62 (62₁, 62₂) detect loosening of the load-fastening belt 91 while being engaged with (by contacting) the guide shafts 33 of the contactors 31 (31₁, 31₂). The sensors 62 are each a switch that switches (its contact point with the contactor 31), corresponding to a position of the contactor, between an open state when the load-fastening belt 91 is loosened and a closed state when the load-fastening belt 91 is fastened. In the same figure, no inside structure of the sensor 62 is shown.

Specifically, the sensors 62 are each a known tactile switch for example. The tactile switch is also called a momentary type push switch (push button). The tactile switch includes an operation part 63. The operation part 63 has a spring inside, and the operation part 63 is biased toward outside by the spring. The tactile switch is switched to a closed condition ("ON") at its contact point when the operation part 63 is pressed, and is switched to an opened condition ("OFF") at its contact point when the operation part 63 is released. The sensors 62 each may be a tactile switch which is conversely configured in terms of the closed and opened conditions. Due to its simple structure, the tactile switch is not easily broken by vibrations, and is available at a reasonable cost. Therefore, the tactile switch can be preferably used for the device of the present invention.

The sensor 62 is mounted on the printed circuit board 61 in a condition that the operation part 63 is aligned to be contacted with the end part of the guide shaft 33 of the contactor 31 concentrically.

The wireless transceiver module 65 is integrally modularized so as to operate as a detection result processing circuit 71 and a transmitting circuit 75 described below. In Fig.2, the wireless transceiver module 65 is shown with a two-dot chain so that the figure can be viewable and be understood easily.

The alarm 67 is an LED (light-emitting diode) for example. The alarm 67 is attached to the case 13, through a hole in the case 13, in a waterproof state.

The power switch 66 is to turn on/off the device through the operations of its operation part (a rotary dial, for example). The power switch 66 is attached to the case 13 in a waterproof state.

Mechanical operation of the load-fastening member loosening detection device 1 is now described.

As shown in Fig.2, the load-fastening member loosening detection device 1 is attached to any part of the load-fastening belt 91 in a condition that the load-fastening belt 91 is loosened. Since the load-fastening belt 91 is inserted from the aperture 29 (reference to Fig.1) of the attaching member 11, the load-fastening member loosening detection device 1 can be easily set to the load-fastening belt 91.

Since the contactors 31₁, 31₂ are biased by the springs 36₁, 36₂, the contactors 31₁, 31₂ protrude toward the load-fastening belt 91 (left side in Fig.2). When the snap ring 45 is contacted with the stopper 42, the amount of protrusion of the contactors 31₁, 31₂ is maximum. In this state, the operation parts 63, 63 of the sensors 62₁, 62₂ are not pressed by the contactors 31₁, 31₂, and thereby the contact points of the sensors 62₁, 62₂ are both opened.

The load-fastening belt 91 is fastened up from the state shown in Fig.2.

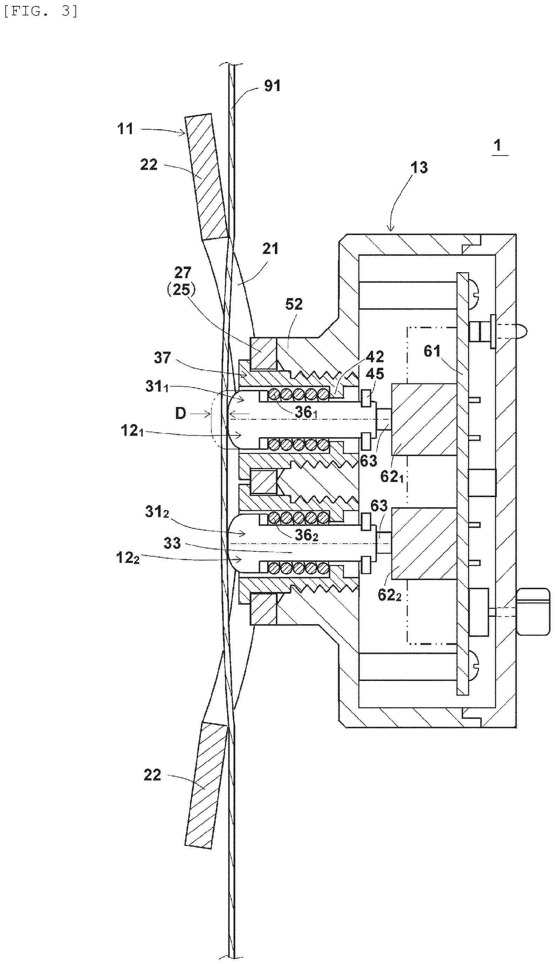

Fig. 3 illustrates a state where the load-fastening belt 91 is fastened to have a proper tension. The load-fastening belt 91 is stretched in a substantially straight line. The tension of the load-fastening belt 91 applies forces onto the end arm parts 22, 22 and the central arm part 25, so that the forces in opposite directions against each other. Due to the action of the forces, the supporting part 21 of the attaching member 11 of the elastic material is deformed and warped toward the left side in Fig. 3. While, the central arm part 25 having elasticity is deformed and warped from the supporting part 21 toward the right side in Fig. 3. The elastic force resulted from the deformation of supporting part 21 and the central arm part 25 allows the load-fastening belt 91 to be sandwiched by the end arm parts 22, 22 and the central arm part 25. Thus the load-fastening member loosening detection device 1 (the attaching member 11) is tightly held and attached to the load-fastening belt 91.

Since the contactors 31₁, 31₂ of the loosening detectors 12₁, 12₂ protrude from the central arm part 25, the contactors 31₁, 31₂ are pressed to move (slide) toward the guide tube 37 side by the tension of the load-fastening belt 91. The spring constant of each of the springs 36₁, 36₂ is set to a value such that the contactors 31₁, 31₂ are pressed to move when the load-fastening belt 91 is fastened with a proper tension. When the operation parts 63, 63 are pressed by the movement of the contactors 31₁, 31₂ toward the guide tube 37, the contact points of the sensors 62₁, 62₂ are both closed.

In this manner, when the contact points of the sensors 62₁, 62₂ are both closed, it can be determined that the load-fastening belt 91 is fastened with a proper tension.

As shown in Fig.3, the contactor 31 is controlled to move a moving distance D from the position shown with a two-dot chain line (a position shown in Fig.2). The moving distance D is set to a value corresponding to the acceptable range of the stroke of the operation parts 63 so that no excessive load acts on the sensors 62.

Each of the contactors 31 is guided by the guide tube 37 to move in the direction perpendicular to the load-fastening belt 91, and thereby the contactor 31 is not obliquely contacted with the operation part 63 even in an environment with violent vibrations. Thus, the contactor 31 stably contacts the operation part 63. In addition, the contactor 31 is not fixed to the operation part 63 and only abuts (contacts) the operation part 63, and thus no excessive force acts on the sensor 62 even if an oblique force acts on the contactor 31. Thus, the sensors 62 operate normally even in an environment with violent vibration. As a result, it can be detected with certainty that the load-fastening belt 91 is fastened with a proper tension. Furthermore, damage to the sensors 62 can be prevented.

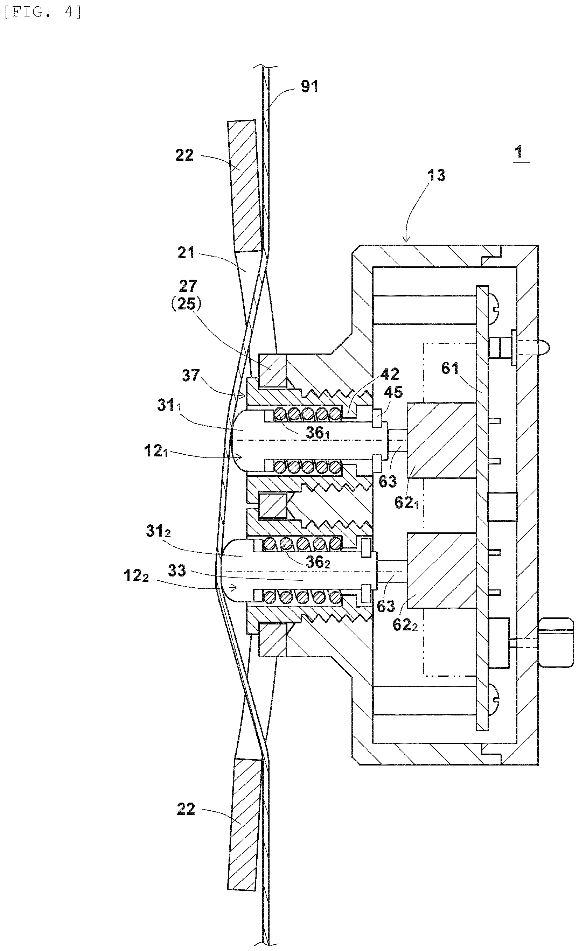

Fig.4 illustrates a state where the load-fastening belt 91 is beginning to be loosened (a slightly loosened state). The spring constant of the spring 36₁ is set to a small value and the spring constant of the spring 36₂ is set to a large value so that, at the beginning of loosening, the contactor 31₁ hardly moves and the contactor 31₂ largely moves. In this state, the contact point of the sensor 62₁ remains to be closed. While, the contact point of the sensor 62₂ enters an open state by the movement of the contactor 31₂. In other words, detection sensitivity of the sensor 62₂ is higher than that of the sensor 62₁. When the contact point of the sensor 62₁ is closed and the contact point of the sensor 62₂ is opened, it can be determined that the load-fastening belt 91 is beginning to be loosened.

When the load-fastening belt 91 is further loosened than the state shown in Fig.4, the contactor 31₁ also moves toward the load-fastening belt 91 by the spring force of the spring 36 as shown in Fig.2, and the contact point of the contactor 31₁ also enters an open state. Therefore, when at least the contact point of the sensor 62₁ is opened, it can be determined that the load-fastening belt 91 is in the loosened state. Note that, when the contact points of sensors 62₁, 62₂ are both opened, it may be determined that the load-fastening belt 91 is in the loosened state.

As shown in Fig.2, it is preferable that the spring constant of the spring 36₁ is appropriately set so that loosening of the load-fastening belt 91 can be detected before the load-fastening belt 91 is largely loosened.

In this manner, the plural loosening detectors 12 are provided, and they have different detection sensitivities, allowing stagewise detection of loosening of the load-fastening belt 91. Therefore, the beginning of loosening of the load-fastening belt 91 can be more certainly detected than the case where only one loosening detector 12 is provided. Especially in an environment with many vibrations, the loosening of the load-fastening belt 91 may rapidly increase once it begins. Therefore, the detection of beginning of loosening of the load-fastening belt 91 without missing can lead to a reliable detection of the loosening before it increases largely.

Provision of the plural loosening detectors 12 realizes a determination that the load-fastening belt 91 is loosening when any of the loosening detectors 12 detects loosening of the load-fastening belt 91, which leads to a reliable detection of loosening of the load-fastening belt 91. In addition, even if any of the loosening detectors 12 fails due to vibrations, loosening of the load-fastening belt 91 can be detected reliably because the other loosening detectors 12 keep operating. When the reliability of the device is enhanced with a redundancy, the detection sensitivities of the loosening detectors 12 may be set to the same by using the springs 36 of the same spring constant in the loosening detectors 12.

Note that, an example has been described in which the detection sensitivities of the loosening detectors 12 are set different due to the different spring constant of the springs 36₁, 36₂, but for example, the springs 36₁, 36₂ of the same spring constant may be used with the sensors 62₁, 62₂ of different detection sensitivities.

The number of the loosening detector 12 is not limited to two, but a larger number of the loosening detector 12 can be provided. The more loosening detectors 12 enable stagewise detection of loosening of the load-fastening belt 91 more minutely. When there is no need to detect loosening of the load-fastening belt 91 stagewise, only one loosening detector 12 can be provided.

An example has been described in which the tactile switch is used as the sensors 62, but the sensors 62 are not limited to this, but load sensors (the load cell) can be used as the sensors 62 for example. When load sensors are used, one end part of the guide shaft 33 of each contactor 31 is to abut on the load sensor. Each of the contactors 31 is not largely moved, but the load sensor can detect a load with which the contactor 31 presses. The fastening of the load-fastening belt 91 can be determined stagewise based on the magnitude of the load detected by the load sensors. When the load sensors are used as the sensors, fastening of the load-fastening belt 91 can be determined stagewise with one loosening detector, but the plural loosening detectors with the load cells is preferably provided for redundancy, in consideration of failure due to vibrations.

Furthermore, each of the guide shafts 33 of the contactors 31₁, 31₂ of the loosening detectors 12₁, 12₂ is configured to be engaged with each of the sensors 62₁, 62₂ in the above description, but each of the guide shafts 33 of the contactors 31₁, 31₂ of the loosening detectors 12₁, 12₂ can be engaged with the plural sensors 62. According to this configuration, even if one of the sensors 62 fails, the other sensor(s) 62 keeps operating. Therefore, loosening of the load-fastening belt 91 can be detected with certainty even in an environment where vibrations occur.

An example has been described in which the supporting part 21 and the central arm part 25 both have an elastic property, but only either one of the supporting part 21 or the central arm part 25 may have an elastic property, or none of the supporting part 21 and the central arm part 25 may have an elastic property. When both the supporting part 21 and the central arm part 25 have an elastic property, the holding force with which the attaching member 11 is held to the load-fastening belt 91 is greatest. When either one of the supporting part 21 or the central arm part 25 has an elastic property, the attaching member 11 can be held to the load-fastening belt 91, but the holding force with which the attaching member 11 is held to the load-fastening belt 91 is lowered to some extent. When none the supporting part 21 and the central arm part 25 have an elastic property, the attaching member 11 can be hold to the load-fastening belt 91, but the holding force with which the attaching member 11 is held to the load-fastening belt 91 is further lowered. When the holding force is insufficient, the attaching member 11 can be attached to the load-fastening belt 91 using an auxiliary member for fixing, such as a clip (not shown in figures). However, if both the supporting part 21 and the central arm part 25 have too small elastic coefficients and are soft, the force with which the load-fastening belt 91 presses the contactor 31 does not work. Therefore, the elastic coefficients of both the supporting part 21 and the central arm part 25 need to be set so that the contactor 31 can be securely pressed by the load-fastening belt 91.

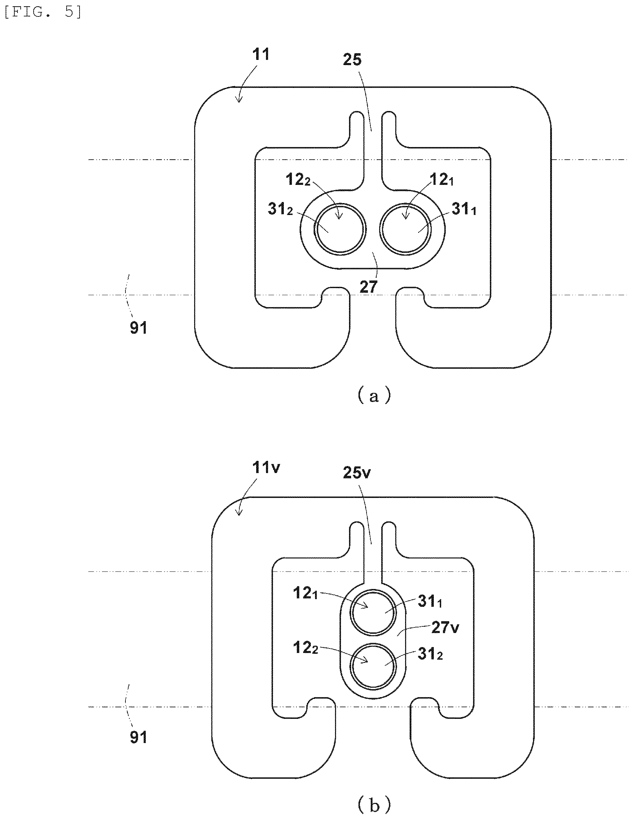

Fig. 5A is a plan view of the attaching member 11 shown in Fig. 1 to Fig. 4. The load-fastening belt 91 is shown with the two-dot chain line in Fig.5. The loosening detectors 12₁, 12₂ (contactor 31₁, 31₂) are attached to the attaching part 27 of the central arm part 25 of the attaching member 11 and are arranged in a line along the longitudinal direction of the load-fastening belt 91. When the loosening detectors 12₁, 12₂ are arranged along the longitudinal direction in this manner, the loosening detectors 12₁, 12₂ can contact the load-fastening belt 91 even if the position of the load-fastening belt 91 is somewhat shifted from the attaching member 11. Therefore, loosening of the load-fastening belt 91 can be detected with certainty. In addition, when a load-fastening rope is used instead of the load-fastening belt 91 as the load-fastening member, the load-fastening rope has a small width (diameter) compared to that of the load-fastening belt 91, but the loosening detectors 12₁, 12₂ can contact the load-fastening rope since the loosening detectors 12₁, 12₂ are arranged along the longitudinal direction of the load-fastening rope. In addition, the plural loosening detectors 12, such as three and more detectors 12, can be easily provided. The loosening detectors 12₁, 12₂ are preferably arranged at the central portion in the width direction of the load-fastening belt 91.

Fig. 5B is a plan view of an attaching member 11v. The attaching member 11v may be applied to the load-fastening member loosening detection device 1. The attaching member 11v is shown with the two-dot chain line in Fig.5B. In the attaching member 11v, the loosening detectors 12₁, 12₂ (contactor 31₁, 31₂) are attached to an attaching part 27v of a central arm part 25v and are arranged along a traverse direction perpendicular to the longitudinal direction of the load-fastening belt 91. In this case, since the loosening detectors 12₁, 12₂ contacts the load-fastening belt 91 at the corresponding positions of the load-fastening belt 91 in the longitudinal direction, a length of the attaching member 11v in the longitudinal direction can be set to be reduced, downsizing the device. In addition, even if the loosening detectors 12₁, 12₂ include the springs 36, 36 of the same spring constant, the force applied to the contactors 31₁, 31₂ can be different because the distal end of the central arm part 25v is largely deformed due to the elasticity. Therefore, with the springs 36, 36 of the same spring constant, detection sensitivities of the loosening detectors 12₁, 12₂ can be made different: in this case, the one which is located closer to the distal end has a higher detection sensitivity.

As shown in Fig. 5A and Fig. 5B, the diameter of the contactor 31 is smaller than the width of the load-fastening belt 91. Although it depends on the features of the load-fastening belt 91 such as material, width and thickness, there are cases where the contactor 31 leaves a mark on the load-fastening belt 91 when the contactor 31 is strongly pressed against the load-fastening belt 91. Thus the contactor 31 is preferably formed to have a large area as possible so as to distribute over the force with which the contactor 31 is pressed against the load-fastening belt 91. In addition, the contactor 31 is preferably formed into a flat shape. Furthermore, the contactor 31 is preferably to be formed into a shape that allows the contactor 31 to contact the load-fastening belt 91 in the traverse direction (the width direction) perpendicular to the longitudinal direction of the load-fastening belt 91 so that the contactor 31 can apply a pressure equally to the load-fastening belt 91 over the width direction.

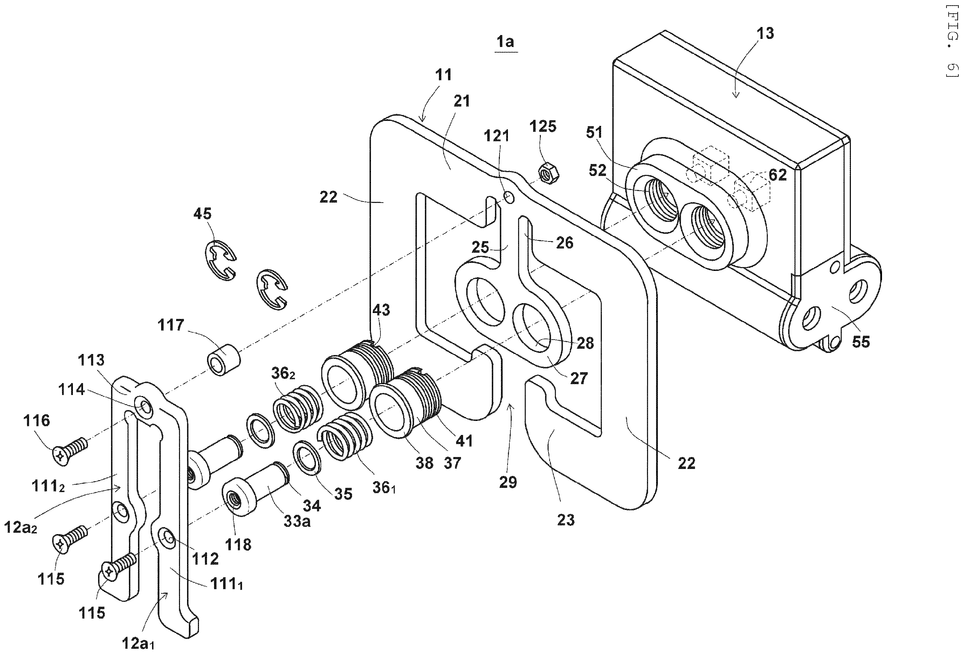

For example, Fig. 6 illustrates a load-fastening member loosening detection device 1a to which the present invention is applied. The load-fastening member loosening detection device 1a is configured such that contactors contact the load-fastening belt 91 in the traverse direction perpendicular to the longitudinal direction of the load-fastening belt 91. The load-fastening member loosening detection device 1a is different from the above described load-fastening member loosening detection device 1 in the configuration of the contactors 31. The other components are similar to those in the load-fastening member loosening detection device 1, and thereby are given the same reference numerals as in the above-described embodiment, and the detailed description thereof is omitted.

The load-fastening member loosening detection device 1a includes a first contacting plate 111₁ as a contactor of a first loosening detector 12a₁ and a second contacting plate 111₂ as a contactor of a second loosening detector 12a₂. The contacting plates 111 (111₁, 111₂) are configured to have a greater length (width) than the width of the load-fastening belt 91 (see Fig. 1). The contacting plates 111 each have an attaching hole 112. A screw hole 118 is located in one end of a shaft-shaped guide shaft 33a. The contacting plates 111 are each fixed to the guide shaft 33a when a screw 115 is inserted through the attaching hole 112 and is engaged with the screw hole 118 of the guide shaft 33a. In this example, as the guide shaft 33a, the screw hole 118 is provided in the guide shaft 33 of the contactor 31 in the load-fastening member loosening detection device 1 shown in Fig. 1. In other words, the load-fastening member loosening detection device 1a is configured to include the contacting plate 111 attached to the contactor 31 of the load-fastening member loosening detection device 1. The contacting plate 111 and the guide shaft 33a may be integrally formed from a resin.

The contacting plate 111 has a flat surface that is contacted with the load-fastening belt 91. The screw 115 is a countersunk head screw, so that the head of the screw 115 does not protrude from the surface of the contacting plate 111.

Even when the contacting plate 111 is fixed to the guide shaft 33a, the contacting plate 111 rotates around the guide shaft 33a. Therefore, an anti-rotating mechanism is added to the contacting plate 111. For example, one end side of the contacting plate 111₁ and one end side of the contacting plate 111₂ are connected each other by a connecting plate 113. The contacting plate 111₁, the contacting plate 111₂ and connecting plate 113 are integrally formed from an elastic material identical to that of the attaching member 11. The connecting plate 113 has a through hole 114 located centrally. A through hole 121 is located at a position in the attaching member 11 corresponding to that of the through hole 114.

A spacer 117 for height adjustment is inserted between the connecting plate 113 and the attaching member 11, and a screw 116 is inserted into the through hole 114, the spacer 117 and the through hole 121. In addition, a nut 125 is engaged with the screw 116. Thus, the connecting plate 113 is fixed to the attaching member 11, preventing the contacting plates 111₁, 111₂ from rotating relative to the guide shaft 33. The contacting plates 111₁, 111₂ can be deformed (warped) due to the elastic property independently from the connecting plate 113.

The load-fastening belt 91 (not shown in figures) is hung on the contacting plates 111₁, 111₂ so that the load-fastening belt 91 is arranged forward in Fig. 6 relative to the contacting plates 111₁, 111₂. Pressing of the contacting plates 111₁, 111₂ by the load-fastening belt 91 causes the guide shafts 33a, 33a to press the operation parts 63, 63 of the sensors 62, 62. Even if the contacting plates 111₁, 111₂ are strongly pressed by the load-fastening belt 91, the pressing force is equally applied to the load-fastening belt 91 in the width direction because the contacting plates 111₁, 111₂ have a greater length than the width of the load-fastening belt 91. Therefore, leaving a mark on the load-fastening belt 91 can be prevented.

The shape of the contacting plate 111 and the anti-rotating mechanism can be appropriately changed.

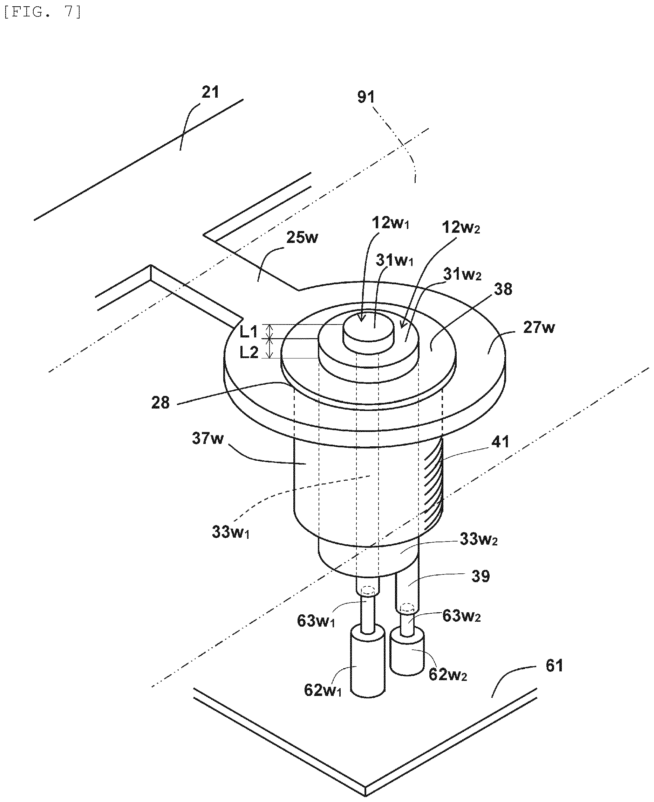

Fig. 7 illustrates, as another example, an enlarged perspective view of a first loosening detector 12w₁ and a second loosening detector 12w₂ attached to a central arm part 25w. The case 13 is not described in Fig. 7. The central arm part 25w, the first loosening detector 12w₁ and the second loosening detector 12w₂ can be applied to the load-fastening member loosening detection device 1. In this example, the plural loosening detectors 12w₁ 12w₂ are arranged concentrically in the central arm part 25w.

The attaching part 27w is located at the distal end of the central arm part 25w. The attaching part 27w has one attaching hole 28. The loosening detectors 12w₁, 12w₂ each include a guide tube 37w which is insertable into the attaching hole 28. The loosening detectors 12w₁ 12w₂ are concentrically disposed inside of the guide tube 37w. A flange 38 is provided on one end side of the guide tube 37w. A male screw 41 which is engaged with the case 13 (not shown in Fig. 7) is located on an outer periphery of the guide tube 37w.

The loosening detector 12w₁ is arranged centrally of the guide tube 37w. The contactor 31w₁ of the loosening detector 12w₁ is the one of a circular push button type disposed coaxially with the guide tube 37w. The loosening detector 12w₂ is arranged on a circumference (an outer periphery) of the loosening detector 12w₁. The contactor 31w₂ of the loosening detector 12w₂ is the one of a circular push button type that is disposed coaxially with the guide tube 37w and has a central hole of the same shape as that of an outer periphery shape of the contactor 31w₁.

The contactor 31w₁ includes the guide shaft 33w₁. The guide shaft 33w₁ is contacted coaxially with the operation part 63w₁ of the first sensor 62w₁. The contactor 31w₂ includes a cylindrical guide shaft 33w₂. The cylindrical guide shaft 33w₂ includes a contacting part 39 extending downward (toward the second sensor 62w₂) from the low edge of the cylindrical guide shaft 33w₂ in the form of a bar (cylinder). The contacting part 39 is contacted with an operation part 63w₂ of the second sensor 62w₂.

The contactor 31w₁ is biased toward the load-fastening belt 91 (upward in Fig. 7) by a spring (not shown in Fig. 7) inside of the guide tube 37w. The contactor 31w₂ is biased toward the load-fastening belt 91 (upward in Fig. 7) by a spring (not shown in Fig. 7) inside of the guide tube 37w. The contactor 31w₁ protrudes toward the load-fastening belt 91 by a larger amount than the contactor 31w₂. A spring constant (elastic coefficient) of the spring of the loosening detector 12w₁ (the contactor 31w₁) is smaller than that of a spring constant of the spring of the loosening detector 12w₂ (the contactor 31w₂).

When pressed by the load-fastening belt 91, the contactor 31w₁ moves into the guide tube 37w. When pressed by the load-fastening belt 91, the contactor 31w₂ moves into the guide tube 37w. The contactor 31w₁ and the contactor 31w₂ independently move from each other. A stroke of the contactor 31w₁ is equal to the sum of a length "L1" and a length "L2". A stroke of the contactor 31w₂ is equal to the length "L2". The length "L1" is a length of the protrusion of the contactor 31w₁ toward the load-fastening belt 91 (upward in Fig. 7) from the contactor 31w₂. The length "L2" is a length of the protrusion of the contactor 31w₂ toward the load-fastening belt 91 from the flange 38. The stroke of the contactor 31w₁ is larger than the stroke of the contactor 31w₂. The sensor 62w₁ which includes the operation part 63w₁ having a stroke corresponding to the stroke of the contactor 31w₁ is used. The sensor 62w₂ which includes the operation part 63w₂ having a stroke corresponding to the stroke of the contactor 31w₂ is used. In addition, the sensor 62w₁ is configured such that: a contact point is opened when the operation part 63w₁ of the sensor 62w₁ is not pressed, the contact point is closed when the operation part 63w₁ of the sensor 62w₁ is pressed by the length "L1", and the contact point is also closed when the operation part 63w₁ of the sensor 62w₁ is pressed by the length "L1+L2". The sensor 62w₂ is configured such that: a contact point is opened when the operation part 63w₂ of the sensor 62w₂ is not pressed, and the contact point is closed when the operation part 63w₁ of the sensor 62w₂ is pressed by the length "L2".

With the loosening detectors 12w₁, 12w₂, when the load-fastening belt 91 is fastened with a properly tension, the contactor 31w₁ and the contactor 31w₂ enter a state where the contactor 31w₁ and the contactor 31w₂ are pressed to reach the flange 38. At this time, the contactor 31w₁ is pressed by the length "L1+L2", with the result that the contact point of the sensor 62w₁ is closed, and the contactor 31w₂ is pressed by the length "L2", with the result that the contact point of the sensor 62w₂ is closed.

When the load-fastening belt 91 is loosened a little, the contactor 31w₂ protrudes by the length "L2" toward the load-fastening belt 91 from the flange 38, with the result that the contactor 31w₁ also protrudes by the same length "L2" as in the contactor 31w₂ toward the load-fastening belt 91 from the flange 38. At this time, the contact point of the sensor 62w₁ remains closed, while the contact point of the sensor 62w₂ is opened.

When the load-fastening belt 91 is loosened further, the contactor 31w₁ protrudes by the length "L1" beyond the contactor 31w₂ toward the load-fastening belt 91 from the flange 38, with the result that the contact point of the sensor 62w₁ is opened and the contact point of the sensor 62w₂ remains opened. Therefore, loosening of the load-fastening belt 91 can be detected stagewise by determining the opened/closed states of the contact point of the sensor 62w₁ and the sensor 62w₂.

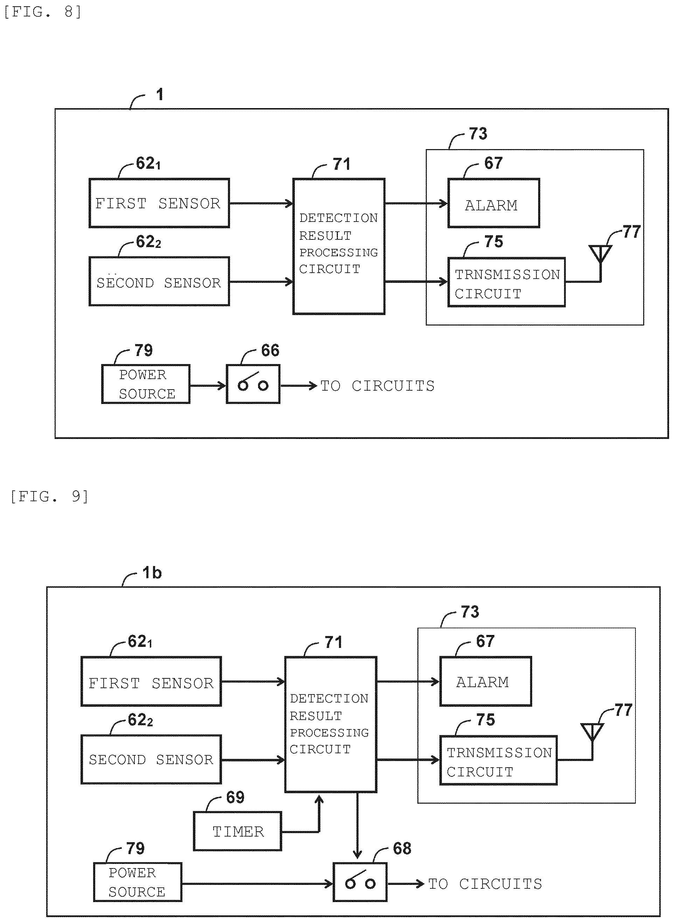

Fig. 8 shows an electronic block diagram of the load-fastening member loosening detection device 1. The load-fastening member loosening detection device 1 includes the first sensor 62₁, the second sensor 62₂, the detection result processing circuit 71, an output part 73, a power source 79 and the power switch 66. The detection result processing circuit 71 detects loosening of the load-fastening belt 91 based on the switching condition of the contact points of the sensor 62₁, 62₂, and outputs the detection result to the output part 73.

The output part 73 outputs the detection result of loosening occurrence. The output part 73 includes at least one of the alarm 67 and the transmitting circuit 75. The alarm 67 outputs the detection result of loosening in the form of light and/or sounds which can be sensed by users. The transmitting circuit 75 externally outputs the detection of loosening. The alarm 67 is, for example, an LED shown in Fig. 2. When the LED is capable of emitting light in three colors, green, yellow and red for example, the detection result processing circuit 71 causes the LED to emit green light for a state without loosening (both the sensor 62₁ and the sensor 62₂ are closed), to emit yellow light for a state with beginning of loosening (the sensor 62₁ is closed and the sensor 62₂ is opened), and to emit red light for a state of loosening (both the sensor 62₁ and the sensor 62₂ are opened). When the LED emits light in a single color for example, the detection result processing circuit 71 causes the LED to be turned off for a state without loosening, to emit slowly flashing light for a state with beginning of loosening, and to emit light with a faster flashing or to turn on light for a state of loosening. When the alarm 67 includes an image display device such as a liquid crystal panel for displaying images, the detection result can be notified by displays of characters and/or images. When the alarm 67 includes a bell, the detection result can be notified by changing a ringing pattern between the state with small loosening at beginning and the state with largely increased loosening. When the load-fastening member loosening detection device 1 includes the plural sensors 62, the alarm 67 may notify users of the loosening stagewise, or may notify of only the fact that loosening has occurred when at least one of the contact points is opened. The output part 73 may include or omit the alarm 67 as needed.

The transmitting circuit 75 is configured to output a detection result of loosening to the outside by wire or wirelessly. The transmitting circuit 75 outputs the detection result of loosening to the outside with an identification number which can identify the source station of the circuit. The transmitting circuit 75 outputs the detection result of loosening to the outside so that it is possible to determine which one of the plural sensors 62₁, 62₂ detects the loosening. When the transmitting circuit 75 outputs the detection result of loosening wirelessly, it can be advantageous to use the wireless transceiver module 65, as shown in Fig. 2, for downsizing. The wireless transceiver module 65 may be a conventionally weak radio module which is available on the market, a specified small power radio module, a Bluetooth module (a registered trademark), a wireless LAN module or a mobile phone module, for example. In this case, the transmitting circuit 75 includes an antenna 77.

When the transmitting circuit 75 outputs the detection result of loosening by wire, the transmitting circuit 75 includes a connector (not shown in figures) such as an electrical wire to be connected with the external device and an optical cable.

The power source 79 includes a primary battery or a secondary battery. When the secondary battery is used as the power source 79, the load-fastening member loosening detection device 1 can include a battery charging circuit. The secondary battery can receive a power supply from a transportation vehicle such as a truck. The power switch 66 (see Fig. 2) controls the on/off of the power supply to each component through operation of the operation part. The load-fastening member loosening detection device 1 may include or omit the power switch 66 as needed.

Fig. 9 shows the load-fastening member loosening detection device 1b which include no power switch 66 operated by an operator, and at least one of the sensors 62 (62₁, 62₂) functions as the power switch. The sensors 62 are of the type which includes a contact point, such as a tactile switch.

The power source 79 supplies a power to each circuit through a relay 68 as shown in Fig. 9. The detection result processing circuit 71 activates the relay 68 when at least one of the contact points of the first sensor 62₁ and the second sensor 62₂ is closed (on). Upon the activation, the load-fastening member loosening detection device 1b starts to operate.

The detection result processing circuit 71A activates the timer 69 when all the contact points of the sensors (the first sensor 62₁ and the second sensor 62₂) are opened, and closes the relay 68 (off) to stop the power supply to each circuit when a predetermined time elapses (for example, ten minutes to three hours). As a result, the load-fastening member loosening detection device 1b stops its operation. With such configuration, the load-fastening member loosening detection device 1b can be automatically switched on and off even if an operator doesn't operate.

Next, a load-fastening member loosening detection system according to the present invention is described.

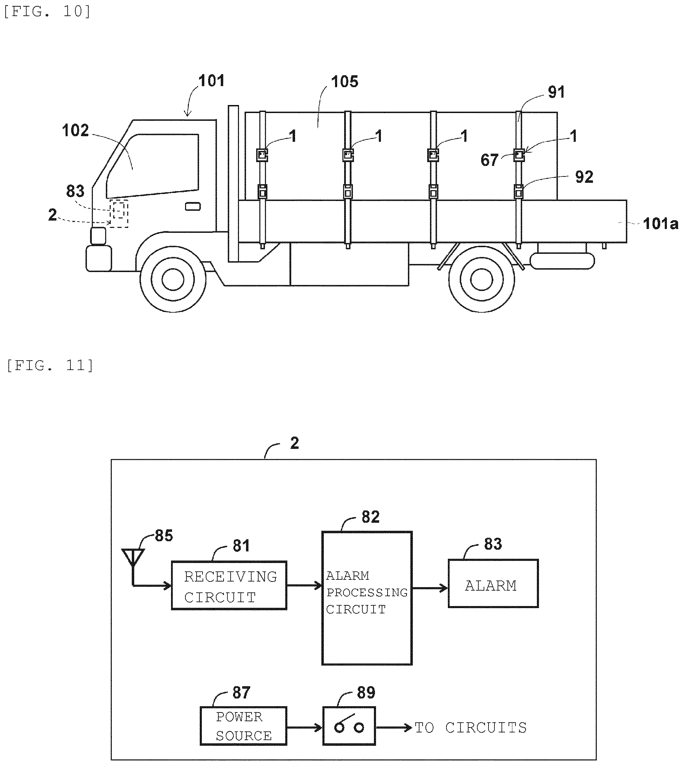

Fig. 10 shows the loosening detection system in use. Fig. 10 shows an example of the loosening detection system that is applied to the truck 101. The loosening detection system includes the load-fastening member loosening detection device 1 described above, and a receiving device 2. The load-fastening member loosening detection device 1 includes at least the transmitting circuit 75 (see Fig. 8) as the output part 73.

Fig. 10 shows a state where a load 105 on a truck 101 is fastened by four load-fastening belts 91. Each of the load-fastening belts 91 has a ratchet type belt fastening metal 92 attached thereto, and is a lashing belt (registered trademark) for example. Operating of the belt fastening metal 92 causes the load-fastening belts 91 to be fastened with a properly tension. At least one load-fastening member loosening detection device 1 is attached to each of the load-fastening belts 91. When the load-fastening belt 91 includes plural portions at which loosening is likely to occur, the load-fastening member loosening detection devices 1 are preferably attached to the portions respectively. For example, two load-fastening member loosening detection devices 1 are preferably attached to the load-fastening belt 91 in total: with respect to one load-fastening belt 91, one of the load-fastening member loosening detection devices 1 is attached to the left side of a body of the truck as seen in Fig. 10, while the other is attached to the right side of the body of the truck, which is not shown in Fig. 10. In Fig. 10, assume that two load-fastening member loosening detection devices 1 are attached to each of the load-fastening belts 91, and eight in total for the four load-fastening belts 91. Identification numbers for identifying each of the load-fastening member loosening detection devices 1 (eight load-fastening member loosening detections 1), for example 1 to 8, are given to the load-fastening member loosening detection devices 1.

The receiving device 2 is attached to the driver's seat 102 of the truck 101.

Fig. 11 shows an electronic block diagram of the receiving device 2. The receiving device 2 includes a receiving circuit 81, an alarm processing circuit 82, an alarm 83, a power source 87 and a power switch 89. The receiving circuit 81 can receive a detection result transmitted by the transmitting circuit 75 (see Fig. 8) of the load-fastening member loosening detection device 1. In a case where the transmitting circuit 75 transmits the detection result wirelessly, the receiving circuit 81 includes an antenna 85 as shown in Fig. 11. In a case where the transmitting circuit 75 transmits the detection result by wire, the receiving circuit 81 includes a connector (not shown in Fig. 11) such as an electrical wire or an optical cable. The receiving circuit 81 may be the one similar to the wireless transceiver module used in the load-fastening member loosening detection device 1 for example. The alarm processing circuit 82 processes the detection result received by the receiving circuit 81, and performs a process to convert the detection result to a signal which the alarm 83 can use for notification.

The alarm 83 notifies users of the detection result of loosening by means of light and/or sounds which can be sensed by the users. For example, the alarm 83 is a display such as a liquid crystal panel, which is arranged at a position visible to a driver. The alarm 83 preferably notifies of which of the load-fastening member loosening detection devices 1, 1, ... has detected the loosening by displaying it in an identifiable manner. Furthermore, the alarm 83 is preferably able to notify users of the detection result of the loosening stagewise so that the level of the loosening can be judged: the levels include no loosening, small loosening, and large loosening. For example, the liquid panel of the alarm 83 displays a numeral for the identification number given to the load-fastening member loosening detection device 1 which has detected loosening, together with an image of a level meter which shows the degree of loosening. The alarm 83 may be a speaker that notifies the occurrence of loosening by sounds.

The power source 87 is a circuit for receiving power supply for operation from a power source of the truck 101 for example. The power switch 89 is a switch which switches on and off the power supply to each circuit.

In the loosening detection system shown in Fig. 10, when one of the load-fastening member loosening detection devices 1, 1, ... detect loosening, the identification number and the detection result of loosening are instantly transmitted. Upon receiving the detection result of loosening, the receiving device 2 causes the alarm 83 to notify the identification number and the detection result of loosening of the driver. As a result, the driver can recognize the occurrence of loosening. The driver can rapidly identify the load-fastening belt 91 which is loosening occurring because the driver can recognize the load-fastening member loosening detection device 1 that has transmitted the detection result of loosening. Furthermore, the driver can recognize the beginning of loosening of the load-fastening belt 91 with certainty even in an environment in which vibrations easily occur because the alarm 83 notifies the driver of the loosening in a manner that show the levels of loosening. Therefore, the driver can refasten the load-fastening belt 91 before the loosening progresses largely, surely preventing the load from collapsing.

In addition, the load-fastening member loosening detection device 1 immediately activates the alarm 67 upon detection of loosening. Accordingly, the driver who gets off the driver's seat to walk to the loading space of the truck 101 can identify the loosened load-fastening belt 91 more rapidly by identifying the load-fastening member loosening detection device 1 that is activating the alarm 67.

Note that, the loosening detection system can include a relay device to relay a signal between the load-fastening member loosening detection device 1 and the receiving device 2.

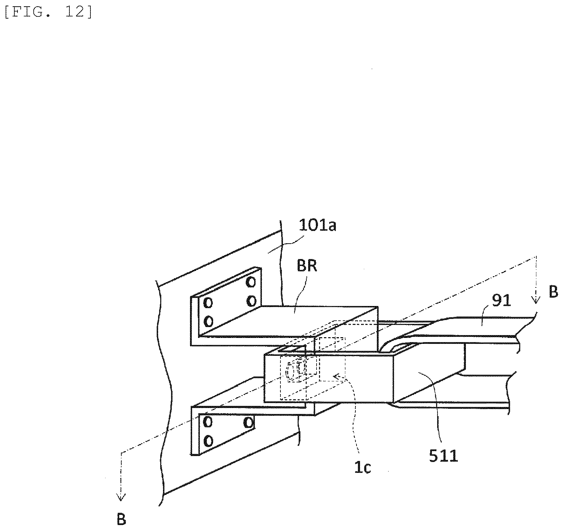

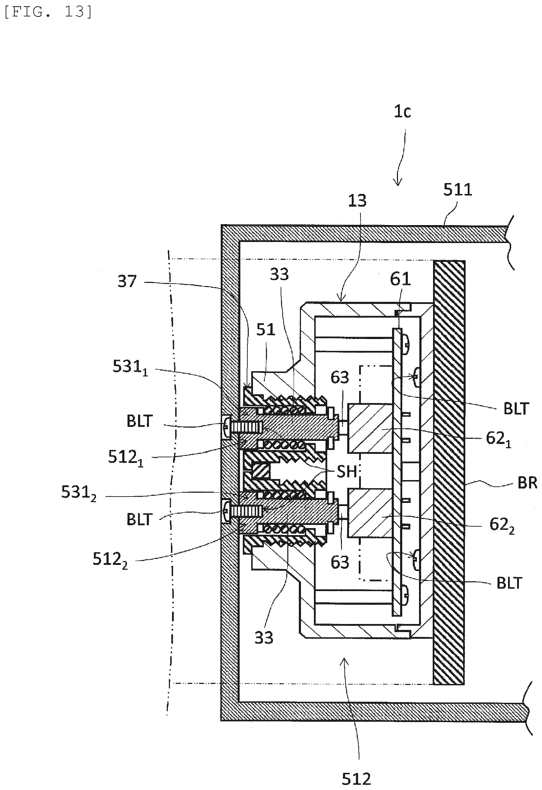

In the load-fastening member loosening detection device 1 (see Fig. 1 and Fig. 5) according to the embodiment of the present invention and the load-fastening member loosening detection device 1a, 1b (see Fig. 6, Fig. 7 and Fig. 9) according to the other embodiments described above, the load-fastening member loosening detection device 1, 1a, 1b themselves are configured to be attached to the load-fastening belt 91, but the present invention is not limited thereto. For example, as shown in the load-fastening member loosening detection device 1c of a modification illustrated in Fig. 12 and Fig. 13, the load-fastening member loosening detection device 1c can be attached to a gate 101a (see Fig. 12) of the truck 101.

As shown in Fig. 13, the load-fastening member loosening detection device 1c of the modification is the same as the load-fastening member loosening detection device 1 of the embodiment except that the attaching member 11 is changed to an attaching member 511, the loosening detectors 12 (12₁, 12₂) are changed to the loosening detector 512 (512₁, 512₂) and the loosening detectors 12 (12₁, 12₂) are attached to the gate 101a (reference to Fig. 12) of the truck 101 through a support implement BR. To avoid a repetition, components of the load-fastening member loosening detection device 1c of the modified embodiment corresponding to components of the load-fastening member loosening detection device 1 of the embodiment are given like numerals as in the above-described embodiment and the details are not described. Here, the gate 101a is one example corresponding to "a bed section of a truck" of the present invention.

The attaching member 511 is a rectangular annular member made of a metal as shown in Fig. 12. The attaching member 511 includes four side surfaces and the loosening detectors 512 (512₁, 512₂) are fastened to one of the four side surfaces where an inserting hole (not shown) is located in which a fastening member such as a bolt BLT for fastening the loosening detector 512 (512₁, 512₂) is inserted.

In the loosening detectors 512₁, 512₂, the contactors 31 (311, 312) of the loosening detector 12₁, 12₂ of the embodiment as described above are changed to the contactors 531 (531₁, 531₂). A screw hole SH is located in a head of each of the contactors 531 (531₁, 531₂). The fastening member such as a bolt BLT is inserted from the inserting hole of the attaching member 511 while the attaching member 511 is contacted with the head of the contactor 531 (531₁, 531₂), and the fastening member is engaged with the screw hole SH. As a result, the attaching member 511 is fastened to the head of the contactor 531 (531₁, 531₂).

The support implement BR is a metal bracket of a substantially "U" shape when seen in a side view as shown in Fig. 12. Flanges to be fastened the gate 101a of the truck 101 are located respectively at both end parts on an opening side of the support implement BR. In addition, as shown in Fig. 13, the support implement BR includes a bottom surface configured as a fastening surface to which the loosening detector 512₁, 512₂, more specifically, a bottom (a surface opposite to a side with the fixing part 51) of the case 13, is fastened by the fastening member such as a bolt BLT.

Next, a situation when the load-fastening member loosening detection device 1c is attached to the gate of the truck 101 is described. First, the loosening detectors 512 (512₁, 512₂) are fastened to the bottom surface of the support implement BR. Subsequently, the attaching member 511 is fastened to each head of the contactor 531 (531₁, 531₂). In addition, the support implement BR is fastened to the gate of the truck 101 by the fastening member such as the bolt BLT. In this way, the attaching of the load-fastening member loosening detection device 1c to the gate 101a of the truck 101 is completed. The load-fastening belt 91 is then inserted into the attaching member 511 of the load-fastening member loosening detection device 1c attached to the gate 101a of the truck 101 as shown in Fig. 12, and in this state, load-fastening belt 91 is fastened, which completes the fixing of the load to a loading space and creates a state in which loosening of the load-fastening belt 91 can be detected. Here, an aspect in which the load-fastening belt 91 is contacted with the loosening detectors 512 (512₁, 512₂) through the attaching member 511 when the load-fastening belt 91 is inserted into the attaching member 511 of the load-fastening member loosening detection device 1c attached to the gate 101a of the truck 101 is one example of embodiments corresponding to "an aspect in which the loosening detectors is contacted with the load-fastening member" in the present invention.

According to such the modified load-fastening member loosening detection device 1c, since the load-fastening member loosening detection device 1c is attached to the gate 101a of the truck 100 with a load, the entire tension of the load-fastening belt 91 can be applied to the loosening detectors 512 (512₁, 512₂). Therefore, loosening of the load-fastening belt 91 can be precisely detected. As a result, loosening of the load-fastening belt 91 can be detected more reliably.

In the modified load-fastening member loosening detection device 1c described above, the load-fastening member loosening detection device 1c is configured to be attached to the gate 101a of the truck 100, however, the present invention is not limited thereto. For example, the load-fastening member loosening detection device 1c may be configured to be indirectly attached the gate 101a of the truck 100 through, for example, a fastening belt, a fastening rope or a fastening chain which is directly attached to the gate 101a of the truck 101. Note that the position to which the load-fastening member loosening detection device 1c is attached is not limited to the gate 101a of the truck 100. Needless to say, the load-fastening member loosening detection device 1c may be attached to anywhere on the truck 101, including the body.

In addition, in the modified load-fastening member loosening detection device 1c described above, the attaching member 511 is configured to be fastened to the head of the contactor 531 (531₁, 531₂) by the fastening member such as the bolt BLT, however, the present invention is not limited thereto. For example, the attaching member 511 and the contactor 531 (531₁, 531₂) may be integrally welded, or the attaching member 511 and the contactor 531 (531₁, 531₂) may be integrally molded.

Furthermore, the modified load-fastening member loosening detection device 1c described above, the support implement BR is configured to be attached to the gate 101a of the truck 101 by the fastening member such as the bolt BLT, however, the present invention is not limited thereto. For example, the support implement BR may be attached to the gate 101a of the truck 101 by welding.

In addition, in the modified load-fastening member loosening detection device 1c described above, the load-fastening member loosening detection device 1c is configured to be attached to the gate 101a of the truck 101 by using the support implement BR, however, the present invention is not limited thereto. The load-fastening member loosening detection device 1c may have any configuration as long as the load-fastening member loosening detection device 1c can be attached to the gate 101a of the truck 101. For example, the load-fastening member loosening detection device 1c can be configured to include the attaching member 11 in the same way as in the case with the load-fastening member loosening detection device 1 so as to be attached to the gate 101a of the truck 101 by the attaching member 11.

The present embodiment illustrates an example of an aspect for carrying out the present invention. Accordingly, the present invention is not limited to the configuration of the present embodiment.

### Reference Signs List

- 1, 1a, 1b, 1c: Loosening detection device of load-fastening member
- 2: Receiving device
- 11, 11v: Attaching member
- 12₁, 12a₁, 12w₁, 512₁: First loosening detector
- 12₂, 12a₂, 12w₂, 512₂: Second loosening detector
- 13: Case
- 21: Supporting part
- 22: End arm part
- 23: Arm tip piece
- 25, 25v, 25w: Central arm part
- 26: Slit
- 27, 27v, 27w: Attaching part
- 28: Attaching hole
- 29: Aperture
- 31, 53₁: Contactor
- 31₁, 31w₁, 531₁: First contactor
- 31₂, 31w₂, 531₂: Second contactor
- 33, 33a, 33w₁, 33w₂: Guide shaft
- 34: Groove
- 35: Washer
- 36₁: First spring 36₂ Second spring
- 37,: 37w Guide tube
- 38: Flange
- 39: Contacting part
- 41: Male screw
- 42: Stopper
- 43: Groove
- 45: Snap ring
- 51: Fixing part
- 52: Screw hole
- 55: Cover
- 61: Printed circuit board
- 62: Sensor
- 62₁, 62w₁: First sensor
- 62₂, 62w₂: Second sensor
- 63, 63w₁, 63w₂: Operation part
- 65: Wireless transceiver module
- 66: Power switch
- 67: Alarm
- 68: Relay
- 69: Timer
- 71: Detection result processing circuit
- 73: Output part
- 75: Transmitting circuit
- 77: Antenna
- 79: Power source
- 81: Receiving circuit
- 82: Alarm processing circuit
- 83: Alarm
- 85: Antenna
- 87: Power source
- 89: Power switch
- 91: Load-fastening belt
- 92: Belt fastening metal
- 101: Truck
- 102: Driver's seat
- 105: Load
- 111₁: First contacting plate
- 111₂: Second contacting plate
- 112: Attaching hole
- 113: Connecting plate
- 114: Through hole
- 115: Screw
- 116: Screw
- 117: Spacer
- 118: Screw hole
- 121: Through hole
- 125: Nut
- D: Moving distance
- L1, L2: Length
- 511: Attaching member
- BLT: Bolt
- BR: Support implement
- SH: Screw hole

## Claims

1. A load-fastening member loosening detection device that detects loosening of an elongated load-fastening member for fastening a load, the device comprising:
an attaching member attachable to a part of the load-fastening member; and
plural loosening detectors mounted on the attaching member for detecting loosening of the load-fastening member.

2. The load-fastening member loosening detection device according to claim 1, wherein the plural loosening detectors have different detection sensitivities from each other.

3. The load-fastening member loosening detection device according to claim 1 or 2, wherein
the attaching member includes three arm parts over or under which the load-fastening member passes and a supporting part that supports the three arm parts, and
the plural loosening detectors are mounted on a central arm part among the three arm parts, the loosening detectors each including,
a contactor that contacts with the load-fastening member and is guided to move in a direction perpendicular relative to the load-fastening member,
an elastic body that biases the contactor toward the load-fastening member, and
a sensor that is engaged with the contactor for detecting loosening of the load-fastening member.

4. The load-fastening member loosening detection device according to claim 1, wherein
the attaching member includes three arm parts over or under which the load-fastening member passes and a supporting part supporting the three arm parts, and
the plural loosening detectors are mounted on a central arm part among the three arm parts, the loosening detectors each including:
a contactor that contacts with the load-fastening member and is guided to move in a direction perpendicular relative to the load-fastening member,
an elastic body that biases the contactor toward the load-fastening member, and
a sensor that is engaged with the contactor for detecting loosening of the load-fastening member,
whereby the plural loosening detectors include the elastic bodies of different elastic coefficients to have different sensitivities.

5. The load-fastening member loosening detection device according to claim 3 or 4, wherein the supporting part and/or the central arm part are elastic.

6. The load-fastening member loosening detection device according to any one of claims 3 to 5, wherein the loosening detectors are arranged on the central arm part along a longitudinal direction of the load-fastening member.

7. The load-fastening member loosening detection device according to claim 6, wherein the contactors have a shape to be in contact with the load-fastening member over a transverse direction that is perpendicular to the longitudinal direction of the load-fastening member.

8. The load-fastening member loosening detection device according to any one of claims 3 to 5, wherein the plural loosening detectors are arranged on the central arm part along a traverse direction that is perpendicular to the longitudinal direction of the load-fastening member.

9. The load-fastening member loosening detection device according to any one of claims 3 to 5, wherein the plural loosening detectors are arranged on the central arm part in a concentric pattern

10. The load-fastening member loosening detection device according to any one of claims 3 to 9, wherein the sensors each are a switch for switching its contact point between an open state corresponding to a position of the contactor when the load-fastening member is loosened and a closed state corresponding to a position of the contactor when the load-fastening member is tensioned.

11. A detection device that detects loosening of an elongated load-fastening member for fastening a load, the load-fastening member loosening detection device comprising:
an attaching member attachable to a load-fastening member; and
a loosening detector configured to detect loosening of the load-fastening member,
the loosening detector including
a contactor for contacting the load-fastening member,
a guide part for guiding the contactor to move perpendicularly relative to the load-fastening member, and
a sensor for detecting loosening of the load-fastening member by way of engagement with the contactor such that the loosening of the load-fastening member is detected as the contactor moves.

12. The load-fastening member loosening detection device according to any one of claims 3 to 11, wherein the loosening detector includes plural sensors such that the sensors are engaged with the contactor.

13. The load-fastening member loosening detection device according to any one of claims 1 to 12, wherein the load-fastening member loosening detection device is attached to a bed section of a truck where the load is contained.

14. The load-fastening member loosening detection device according to any one of claims 1 to 13, further comprising a transmitting circuit that transmits a detection result of the loosening detectors to the outside by wire or wirelessly.

15. The load-fastening member loosening detection device according to any one of claims 1 to 14, wherein at least one of the plural loosening detectors also functions as a power switch of the device.

16. A load-fastening member loosening detection system, comprising:
the load-fastening member loosening detection device according to claim 14 or 15, and
a receiving device including a receiving circuit that receives a detection result transmitted by the transmitting circuit of the load-fastening member loosening detection device, an alarm, and an alarm processing circuit that causes the alarm to notify the detection result received by the receiving circuit.
